(19) **Europäisches Patentamt / European Patent Office / Office européen des brevets**

(11) **EP 3 471 449 B1**

(12) **FASCICULE DE BREVET EUROPEEN**

(45) Date de publication et mention
de la délivrance du brevet:
**29.04.2020 Bulletin 2020/18**

(51) Int Cl.:
*H04W 16/18* $^{(2009.01)}$   *H04W 4/021* $^{(2018.01)}$
*H04W 64/00* $^{(2009.01)}$   *G06F 17/18* $^{(2006.01)}$
*G06Q 50/26* $^{(2012.01)}$   *G06Q 50/32* $^{(2012.01)}$
*H04L 29/08* $^{(2006.01)}$

(21) Numéro de dépôt: **18200602.3**

(22) Date de dépôt: **16.10.2018**

(54) **PROCÉDÉ D'APPRENTISSAGE DE COEFFICIENTS D'ESTIMATION DE LA POPULATION, ET PROCÉDÉ D'ESTIMATION DE LA POPULATION**

VERFAHREN ZUM EINLERNEN VON EINSCHÄTZUNGSKOEFFIZIENTEN DER BEVÖLKERUNG UND VERFAHREN VON EINSCHÄTZUNGEN DER BEVÖLKERUNG

METHOD OF LEARNING OF ESTIMATION COEFFICIENTS OF THE POPULATION AND METHOD OF LEARNING OF ESTIMATION OF THE POPULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2017 FR 1759705**

(43) Date de publication de la demande:
**17.04.2019 Bulletin 2019/16**

(73) Titulaires:
• **Bouygues Telecom**
  **75116 Paris (FR)**
• **Institut de Recherche Technologique Systemx**
  **91120 Palaiseau (FR)**
• **Institut Mines-Telecom / Telecom Sudparis**
  **91000 Evry (FR)**

(72) Inventeurs:
• **ZEPHIR, Arnold**
  **92366 Meudon La Foret Cedex (FR)**
• **BACHIR, Danya**
  **91120 Palaiseau (FR)**
• **GAUTHIER, Vincent, Michel**
  **91120 Palaiseau (FR)**
• **EL YACOUBI, Mounîm, Abdenaim**
  **91300 Massy (FR)**
• **KHODABANDELOU, Ghazaleh**
  **92800 Puteaux (FR)**

(74) Mandataire: **Regimbeau**
     **20, rue de Chazelles**
     **75847 Paris Cedex 17 (FR)**

(56) Documents cités:
**US-B2- 9 094 797**

• **FENGLI XU ET AL: "Context-aware real-time population estimation for metropolis", PERVASIVE AND UBIQUITOUS COMPUTING, ACM, 2 PENN PLAZA, SUITE 701 NEW YORK NY 10121-0701 USA, 12 septembre 2016 (2016-09-12), pages 1064-1075, XP058279140, DOI: 10.1145/2971648.2971673 ISBN: 978-1-4503-4461-6**
• **Pierre Deville et al.: "Dynamic population mapping using mobile phone data", PNAS, Proceedings of the National Academy of Sciences, vol. 111 11 novembre 2014 (2014-11-11), XP002776343, Extrait de l'Internet: URL:http://www.pnas.org/content/111/45/15888.full.pdf [extrait le 2017-12-04]**
• **KHODABANDELOU GHAZALEH ET AL: "Population estimation from mobile network traffic metadata", 2016 IEEE 17TH INTERNATIONAL SYMPOSIUM ON A WORLD OF WIRELESS, MOBILE AND MULTIMEDIA NETWORKS (WOWMOM), IEEE, 21 juin 2016 (2016-06-21), pages 1-9, XP032930312, DOI: 10.1109/WOWMOM.2016.7523554**

EP 3 471 449 B1

## Description

DOMAINE TECHNIQUE GENERAL

La présente invention concerne des procédés d'apprentissage de coefficients d'estimation de la population, et d'estimation de la population, sur la base de données de téléphonie cellulaire.

ETAT DE L'ART

Une des problématiques actuelles dans un contexte d'optimisation des infrastructures et d'amélioration de la sécurité des populations (risques d'attentats, de catastrophes naturelles ou industrielles, etc.) est la possibilité de pouvoir estimer le nombre de gens dans une zone déterminée à un instant donné, par exemple dans une gare, un centre commercial, voire un arrondissement complet. Cette estimation doit de plus pouvoir être effectuée si possible en temps réel, de sorte à pouvoir suivre l'évolution de ce nombre de personnes au cours de la journée (analyse des « heures de pointe » par opposition aux « heures creuses »).

De nombreuses techniques existent, allant du comptage manuel à l'analyse d'images de vidéo-surveillance.

Plus récemment, partant du prédicat qu'un nombre significatif de personnes est équipé d'un terminal mobile, en particulier de type smartphone, il a été proposé d'estimer ce nombre de personne à partir des données d'utilisation des terminaux mobiles (dites données cellulaires), par exemple la densité d'appels ou de SMS (nombre d'appels/SMS pour une antenne relais sur la surface couverte par cette antenne).

On peut notamment utiliser des données de signalisation proviennent de préférence de données de contexte du réseau de données mobiles, notamment appelées données de contexte PDP, « Packet Data Protocol » en anglais, dans le protocole mobile GTP, « GPRS Tunnelling Protocol » en anglais, issu de la norme mobile GPRS, « General Packet Radio Service » en anglais. Les standards concernés sont 3GPP TS 29.060 et 3GPP TS 29.274.

Dans une variante, on peut utiliser les données de signalisation proviennent des canaux voix du réseau de télécommunications mobiles, notamment provenant du protocole MAP, « Mobile Application Part » en anglais, protocole dérivé du protocole SS7, « Signalling System n°7 » en anglais. Les standards concernés sont 3GPP TS 09.02 et 3GPP TS 29.002.

On sait par ailleurs obtenir la localisation d'un appareil mobile, utilisant des informations relatives à la connexion de l'appareil à des stations de base d'un réseau de télécommunications mobiles, voir par exemple le brevet US 9 094 797.

Partant de là, l'idée est d'effectuer une étape dite de « redressement » permettant de passer du nombre estimé de terminaux mobiles opérationnels détectés au nombre de personnes, tel que décrit par exemple dans la publication « Dynamic population mapping using mobile photo data », par Pierre Deville et al., PNAS vol. 111, 11 novembre 2014: pour une zone donnée $i$, la densité de population $\rho_i$ sur cette zone est obtenue via une fonction $\rho_i = \alpha\sigma_i^{\beta}$, où $\sigma_i$ est la densité d'appels et $\alpha$, $\beta$ deux coefficients prédéterminés.

Bien qu'appelée « dynamique », cette méthode est en fait purement statique puisque les coefficients sont constants.

Or on constate pourtant que la corrélation entre la densité d'appels/SMS et la densité de population varie en fonction du temps. En d'autres termes, à population constante, il y a des heures dans la journée et des jours dans l'année où les gens téléphonent davantage.

Ainsi une méthode statique donne des résultats en pratique faux si l'on cherche la densité de population en temps réel. Cette méthode est seulement fiable seulement si on moyennise les résultats sur un intervalle de temps assez long.

Partant de ce constat, il est proposé dans le document « Population Estimation from Mobile Network Traffic Metadata », par Ghazalaeh Khodabandelou et al., une vraie méthode dynamique prenant en compte un paramètre supplémentaire $\lambda_i$ appelé « l'activité », qui représente sur la zone le nombre moyen par utilisateur sur un intervalle de temps (par exemple par heure) « d'événements » liés à l'utilisation du terminal mobile (début/fin d'appels, émission/réception de SMS, connexion à internet, etc.). On obtient une formule affinée $\rho_i = (a_{\alpha}\lambda_i + b_{\alpha})\sigma_i^{(a_{\beta}\lambda_i + b_{\beta})}$.

Si cette méthode résout assez bien le problème de variabilité temporelle, on constate qu'elle reste approximative, en particulier si l'on cherche à calculer la densité de population dans des « lieux-dits » fermés de petite taille tels qu'une gare, un stade, un hôpital, un centre commercial, etc., et encore plus lors de situations occasionnelles (par exemple le nombre de personnes dans le stade lors d'un match) et non récurrentes.

Il serait ainsi souhaitable de disposer d'un algorithme efficace, fiable, et plus universel que les algorithmes connus. Le document "Context-aware real-time population estimation for metropolis" de FENGLI XU ET AL " publié le 12-09-2016 décrit également l'art antérieur pertinent.

PRESENTATION DE L'INVENTION

L'invention est définie dans les revendications 1 à 9. Selon un premier aspect l'invention concerne un procédé d'apprentissage de coefficients d'estimation de la population dans une zone de référence, comprenant la mise en œuvre par des moyens de traitement de données d'un équipement d'étapes de :

(a) Pour chacune d'une pluralité d'antennes-relais définissant une première partition en cellules de Voronoï de ladite zone de référence, obtention depuis un serveur d'opérateur téléphonique de la valeur au cours du temps pour ladite cellule de Voronoï associée à l'antenne-relais d'un premier paramètre de téléphonie mobile représentatif de la présence d'abonnés de l'opérateur téléphonique ;

(b) Pour chaque bloc d'un ensemble de blocs définissant une deuxième partition de ladite zone de référence, calcul de la valeur au cours du temps pour le bloc dudit premier paramètre de téléphonie mobile, en fonction, pour chaque cellule de Voronoï présentant une intersection non nulle avec ledit bloc :

◦ De la valeur dudit premier paramètre de téléphonie mobile obtenu pour ladite cellule de Voronoï ;
◦ de la surface de ladite intersection par rapport à la surface de toute ladite cellule de Voronoï ; et
◦ de la population dudit bloc par rapport aux populations des blocs présentant une intersection non nulle avec ladite cellule de Voronoï ;

(c) Apprentissage des coefficients d'un modèle liant au moins ledit premier paramètre de téléphonie mobile à la population, à partir d'une base de données d'apprentissage représentatives de la population dans chaque bloc dudit ensemble.

Selon des caractéristiques avantageuses et optionnelles :

- le premier paramètre de téléphonie mobile représentatif de la présence d'abonnés de l'opérateur téléphonique est le nombre de terminaux mobiles connectés ayant effectué dans un intervalle de temps prédéterminé au moins un événement actif ;
- ledit événement actif est choisi parmi un début ou une fin d'appel téléphonique, une émission ou une réception d'un message de type SMS, et une émission ou une réception de données ;
- l'étape (a) comprend le calcul par le serveur d'opérateur de la valeur au cours du temps pour chaque cellule de Voronoï du premier paramètre de téléphonie mobile en fonction de données brutes des antennes-relais ;
- la valeur dudit premier paramètre $\sigma_{b_i}$ pour un bloc $b_i$ en fonction des valeurs dudit paramètre $\sigma_{c_j}$ pour chaque cellule de Voronoï $c_j$ présentant une intersection non nulle avec ledit bloc $b_i$ est donné par la formule

$$\sigma_{b_i} = \sum_j a \cdot w^{(1)}_{b_i,c_j} \cdot w^{(2)}_{b_i,c_j} \cdot \sigma_{c_j}, \quad \text{où} \quad w^{(1)}_{b_i,c_j}$$

est le rapport entre la surface $A_{b_i \cap c_j}$ de ladite intersection $b_i \cap c_j$ et la surface $A_{c_j}$ de toute ladite cellule de Voronoï $c_j$, $w^{(2)}_{b_i,c_j}$ est le rapport entre la population $P_{b_i}$ dudit bloc $b_i$ et les populations $\sum_k P_{b_k}$ des blocs $b_k$ présentant une intersection non nulle avec ladite cellule de Voronoï $c_j$, et a est une constante ;
- l'étape (a) comprend également l'obtention de la valeur au cours du temps pour chaque cellule de Voronoï d'un deuxième paramètre de téléphonie mobile représentatif de l'activité moyenne des abonnés de l'opérateur téléphonique, l'étape (b) comprenant le calcul d'une valeur en cours du temps du deuxième paramètre de téléphonie mobile moyennisé sur l'ensemble des cellules de Voronoï, et le modèle de l'étape (c) liant les premier et deuxième paramètres de téléphonie mobile à la population.

Selon un deuxième aspect, l'invention concerne un procédé d'estimation de la population dans une zone donnée à un instant donné, comprenant la mise en œuvre par des moyens de traitement de données de l'équipement d'étapes de :

(a) Mise en œuvre d'un procédé d'apprentissage de coefficients d'estimation de la population dans la zone de référence le premier aspect ;
(b) Pour chaque cellule de Voronoï présentant une intersection non nulle avec ladite zone donnée, obtention depuis le serveur d'opérateur téléphonique de la valeur à l'instant donné pour ladite cellule de Voronoï du premier paramètre de téléphonie mobile ;
(c) Calcul d'une valeur globale du premier paramètre pour ladite zone donnée en fonction

◦ De la valeur dudit premier paramètre de téléphonie mobile obtenu pour chacune des cellules de Voronoï présentant une intersection non nulle avec ladite zone donnée ;
◦ de la surface de la zone donnée et de chacune desdites cellules de Voronoï présentant une intersection non nulle avec ladite zone donnée ; et

(d) Application à la valeur globale calculée du premier paramètre dudit modèle liant au moins ledit premier paramètre de téléphonie mobile à la population avec les coefficients appris.

Selon des caractéristiques avantageuses et optionnelles :

- l'étape (c) comprend également la correction de la valeur globale du premier paramètre en retirant une valeur moyenne du premier paramètre au cours du temps ;
- l'étape (b) comprend également l'obtention de la valeur à l'instant donné présentant une intersection non nulle avec ladite zone donnée d'un deuxième paramètre de téléphonie mobile représentatif de l'activité moyenne des abonnés de l'opérateur téléphonique, l'étape (c) comprenant le calcul d'une valeur à l'instant donné du deuxième paramètre de téléphonie mobile moyennisé sur l'ensemble des cellules de Voronoï présentant une intersection non nulle avec ladite zone donnée, et le modèle de l'étape (c) liant les premier et deuxième paramètres de téléphonie mobile à la population ;

- ledit modèle est de la forme $\rho(t) = \alpha(\lambda, t)\sigma(t)^{\beta(\lambda,t)}$, où $\rho(t)$ est la densité de population, $\sigma(t)$ le premier paramètre de téléphonie mobile, et $\lambda(t)$ le deuxième paramètre ;

- $\alpha(\lambda, t) = \frac{a_\alpha}{\lambda(t)} + b_\alpha$ et $\beta(\lambda, t) = \frac{a_\beta}{\lambda(t)} + b_\beta$, où $a_\alpha$, $b_\alpha$, $a_\beta$, $b_\beta$ sont les coefficients appris.

Selon un troisième et un quatrième aspect, sont proposés un produit programme d'ordinateur comprenant des instructions de code pour l'exécution d'un procédé selon le premier aspect d'apprentissage de coefficients d'estimation de la population dans une zone de référence ou selon le deuxième aspect d'estimation de la population dans une zone donnée à un instant donné, lorsque ledit programme est exécuté par un ordinateur ; et des moyens de stockage lisibles par un équipement informatique sur lesquels un produit programme d'ordinateur comprend des instructions de code pour l'exécution d'un procédé selon le premier aspect d'apprentissage de coefficients d'estimation de la population dans une zone de référence ou selon le deuxième aspect d'estimation de la population dans une zone donnée à un instant donné.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

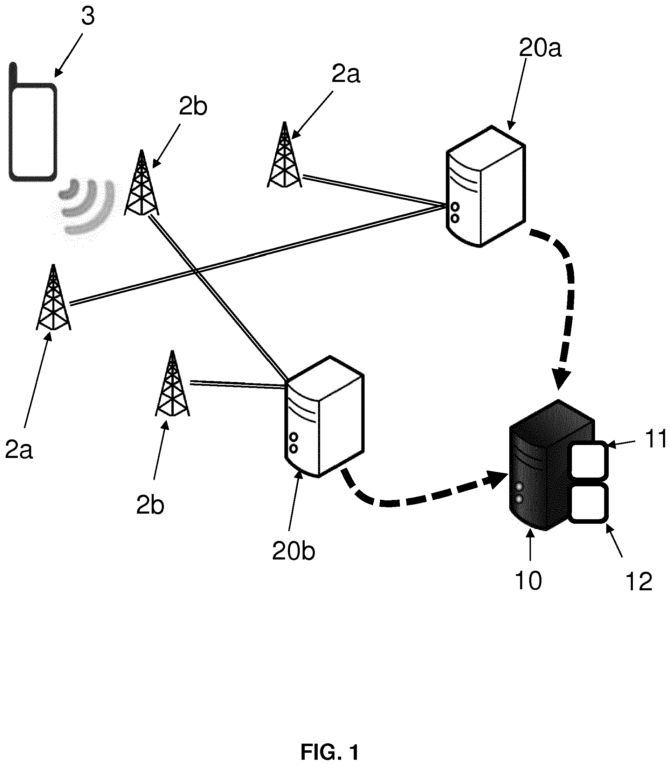

- la figure 1 représente une architecture de réseau pour la mise en œuvre des procédés selon l'invention.

DESCRIPTION DETAILLEE

*Architecture globale*

Selon deux aspects complémentaires de l'invention, sont proposés :

- un procédé d'apprentissage de coefficients d'estimation de la population dans une zone de référence ; et
- un procédé d'estimation de la population dans une zone donnée (utilisant les coefficients avantageusement appris grâce au premier procédé).

Ces deux types de procédés sont mis en œuvre au sein d'un système présentant une architecture telle que représentée par la **figure 1**, grâce à un premier et/ou un deuxième équipement 10. Dans la suite de la présente description on considèrera le même équipement 10, mais il est tout à fait possible qu'ils soient distincts, il suffit qu'ils se transmettent les coefficients appris.

Le ou les équipements 10, par exemple de type serveur, comprennent des moyens de traitement de données 11 (un ou plusieurs processeurs), et généralement des moyens de stockage de données 12 (une mémoire), et une interface utilisateur 13.

Le système comprend également une pluralité d'antennes-relais 2a, 2b, et un ou plusieurs serveurs d'opérateur téléphonique 20a, 20b chacun associé et connecté à un sous-ensemble des antennes relais 2a, 2b.

Plus précisément, on considère que chacun desdits sous-ensembles regroupes les antennes-relais 2a, 2b opérées par un opérateur téléphonique parmi une pluralité d'opérateurs, le serveur 20a, 20b du sous-ensemble collectant les données téléphoniques pour cet opérateur.

Dans l'exemple représenté par la figure 1, on a un premier sous-ensemble des antennes relais 2a connectées au server 20a d'un premier opérateur, et un deuxième sous-ensemble des antennes-relais 2b connectées au serveur 20b d'un deuxième opérateur. Généralement (quand on n'a accès seulement aux données d'un unique opérateur), on a un seul serveur 20a et un seul sous-ensemble d'antennes-relais 2a.

Le serveur d'opérateur 20a, 20b est connecté à l'équipement 10 pour la mise en œuvre des présents procédés.

Un terminal mobile 3 se connecte en fonction de son opérateur à l'une des antennes-relais 2a ou 2b associées à cet opérateur.

Comme expliqué dans la suite de l'invention on prendra un exemple mono-opérateur, mais l'homme du métier saura transposer.

*Principe de l'invention*

Il est constant dans les procédés connus que l'on procède « par antenne-relais ».

On travaille traditionnellement sur des « cellules de Voronoï », c'est-à-dire une décomposition particulière du plan déterminée par les distances à un ensemble discret d'objets (en l'espèce les antennes-relais). En d'autres termes, on modélise les zones associées à chaque antenne-relais par les cellules de Voronoï correspondantes. Et en pratique les cellules de Voronoï ne coïncident pas exactement avec les cellules « réelles », c'est-à-dire les zones d'influence des diverses antennes relais. Plus précisément, les cellules de Voronoï sont polygonales alors que les cellules réelles sont plus arrondies, et il est possible d'être hors de la cellule de Voronoï associée à une première antenne relais (i.e. d'être dans la cellule de Voronoï associée à une deuxième antenne-relais) tout en étant pourtant connecté à cette première antenne relais. Les surfaces associées aux cellules de Voronoï ne coincident donc en réalité pas exactement aux aires des cellules « réelles ».

Pour corriger ce biais, un pré-traitement des données vise à changer d'échelle spatiale, en assignant aux personnes associées à chaque antenne des « blocs », c'est-à-dire des éléments géographiques élémentaires prédéterminés, indépendants de la position des antennes relais. Plus précisément, les blocs forment un pavage, c'est-à-dire à nouveau un découpage du plan (en d'autres termes une partition). On a donc un premier découpage du plan formé par les cellules de Voronoï, et un deuxième découpage de plan formé par les blocs. Et au lieu de travailler sur le découpage en cellules de Voronoï, on va travailler sur découpage en blocs, qui est exact.

Ils ont en effet des aires connues avec précision. Selon un mode de réalisation, on peut utiliser les « ilots de recensement » (en anglais census blocks), qui sont la plus petite unité géographique reconnue officiellement. Par exemple, le territoire des Etats-Unis est subdivisé en 11 155 486 blocs de type ilot de recensement. En pratique, de tels blocs vont de quelques milliers de mètres carrés à plus de cent kilomètres carrés.

L'affectation de chaque personne d'une cellule à un bloc est appelée le « mapping ». Jusque-là, on se contente de travailler de façon purement surfacique (« areal mapping ») en considérant l'aire des cellules de Voronoï, et des blocs, et surtout celles de leurs intersections respectives.

Plus précisément, si $\sigma_{b_i}$ est une donnée cellulaire (par exemple le nombre d'appels ou de SMS) à l'échelle du i-ème bloc et $\sigma_{c_j}$ la même donnée cellulaire à l'échelle de la j-ième cellule de Voronoï, on passe de l'une à l'autre avec la fonction

$$\sigma_{b_i} = \frac{1}{A_{b_i}} \sum_j \sigma_{c_j} A_{b_i \cap c_j}$$, où $A_{b_i}$ est l'aire du i-ème bloc et $A_{b_i \cap c_j}$ celle de l'intersection du i-ème bloc avec la j-ième cellule de Voronoï.

Les inventeurs ont constaté que cette technique souffre en fait d'un biais important. En effet, ce modèle surfacique fait implicitement l'hypothèse d'une répartition uniforme des personnes dans les cellules ou les blocs, ce qui en pratique faux.

Par conséquent, les inventeurs ont eu l'idée de pondérer le mapping des personnes en fonction des populations résidentielles des blocs et non seulement leurs aires. Les nombres d'habitants (c'est-à-dire les populations résidentielles, à ne pas confondre avec les populations « instantanées » que le présent procédé cherche à déterminer) des blocs sont en effet connus avec précision du fait de leur caractère officiel.

Le présent procédé utilise ainsi un mapping dit hybride en lieu et place du mapping surfacique, en raisonnant à la fois par unité de surface et par unité de population résidentielle. On démontrera plus tard la pertinence d'un tel traitement, en particulier en cas de mise en œuvre du présent procédé dans une « lieu-dit », c'est-à-dire un choix de bloc comme une zone fermée définie comme un stade.

On va voir que de façon surprenante les coefficients obtenus pas un tel mapping hybride sous non seulement très fiables, mais en plus transposable à l'estimation de population en lieux-dits qui pourtant n'ont pas ou peu de population résidentielle.

*Procédé d'apprentissage*

Le présent procédé comprend commence par une étape (a) d'obtention par les moyens de traitement de données 11 de l'équipement 10 de valeurs au cours du temps d'un premier paramètre de téléphonie mobile représentatif de la présence d'abonnés d'un opérateur téléphonique.

Comme expliqué, la valeur au cours du temps de ce premier paramètre est obtenue pour chacune des antennes-relais 2a, 2b d'un opérateur qui définissent une première partition en cellules de Voronoï de ladite zone de référence. La zone de référence est une zone pour laquelle une base de données d'apprentissage est disponible, i.e. des données de population des blocs constituant cette zone de référence est disponible.

Le premier paramètre est obtenu depuis au moins un serveur d'opérateur 20a, 20b, généralement un seul comme expliqué (i.e. l'équipement 10 n'a accès aux données qu'un opérateur), i.e. le premier paramètre est représentatif de la présence d'abonnés de cet unique opérateur téléphonique. On passe des données d'un opérateur aux données de tous les opérateurs en divisant par exemple par sa part de marché. On comprendra qu'alternativement il est possible de recevoir les premiers paramètres pour plusieurs opérateurs.

L'étape (a) comprend préférentiellement la mesure de la présence, c'est-à-dire le calcul de la valeur au cours du temps du premier paramètre par le serveur d'opérateur 20a, 20b à partir de données brutes des antennes-relais 2a, 2b, et sa transmission à l'équipement 10. Il s'agit donc d'une étape de pré-traitement des données. On comprend que cette étape de calcul implique l'anonymisation des données brutes, pour respecter la vie privée des abonnés.

Le premier paramètre, dit de « présence », est préférentiellement le nombre de terminaux mobiles 3 connectés ayant effectué dans un intervalle de temps prédéterminé au moins un événement actif. Plus précisément, ledit intervalle désigne un pas de temps entre deux obtentions d'une valeur du premier paramètre. On pourra prendre par exemple quinze minutes ou une heure.

Le premier paramètre peut être surfacique, c'est-à-dire par unité de surface de la cellule. On notera $\sigma_{c_j}(t)$ le premier paramètre de la j-ème cellule de Voronoï dans le cas particulier où le premier paramètre est la densité de présence surfacique (i.e. le nombre d'événements actifs dans la cellule par unité de surface).

Ledit événement actif est au moins un choisi parmi un début ou une fin d'appel téléphonique, une émission ou une réception d'un message de type SMS, et une émission ou une réception de donnée, avantageusement tous.

On comprend que cette méthode de mesure de la présence définit qu'une personne apparait présente dans la cellule si et seulement si son terminal 3 effectue un événement. Cela diffère de ce qui était jusque-là proposé où une personne était considérée présente à un endroit tant que son terminal 3 n'a pas effectué un événement à un autre endroit.

La présente méthode de mesure de la présence apparait plus représentative des comportements réels des abonnés et donne de meilleurs résultats.

De façon préférée, l'étape (a) comprend également l'obtention de la valeur au cours du temps pour chaque cellule de Voronoï d'un deuxième paramètre de téléphonie mobile représentatif de l'activité moyenne des abonnés de l'opérateur téléphonique.

Comme expliqué, « l'activité » est le nombre moyen d'événements actif par terminal 3 connecté sur un intervalle de temps donné, à nouveau par exemple quinze minutes ou une heure. Elle est notée $\lambda_{c_j}(t)$.

Dans une deuxième étape (b), on va procéder au « mapping » évoqué avant, c'est-à-dire au passage de l'échelle des cellules à l'échelle des blocs (ceux d'un ensemble de blocs définissant une deuxième partition de ladite zone de référence).

En d'autres termes, dans l'étape (c) les moyens de traitement de données 11 calculent pour chaque bloc dudit ensemble de blocs la valeur au cours du temps pour le bloc dudit premier paramètre de téléphonie mobile.

Pour un bloc on considère toutes les cellules ayant une intersection non nulle avec le bloc.

Le calcul de la valeur du premier paramètre pour un bloc se fait en fonction, pour chaque cellule de Voronoï présentant une intersection non nulle avec ledit bloc :

◦ De la valeur dudit premier paramètre de téléphonie mobile obtenu pour ladite cellule de Voronoï ;
◦ de la surface de ladite intersection par rapport à la surface de toute ladite cellule de Voronoï ; et
◦ de la population (résidentielle) dudit bloc par rapport aux populations (résidentielles) des blocs présentant une intersection non nulle avec ladite cellule de Voronoï

En notant $b_i$ le i-ème bloc et $c_j$ la j-ème cellule d'intersection non nulle, le rapport entre la surface $A_{b_i \cap c_j}$ de ladite intersection $b_i \cap c_j$ et la surface $A_{c_j}$ de toute ladite cellule de Voronoï $c_j$ définit un premier poids

$w_{b_i,c_j}^{(1)} = \frac{A_{b_i \cap c_j}}{A_{c_j}}$, et le rapport entre la population $P_{b_i}$ dudit bloc $b_i$ et les populations $\sum_k P_{b_k}$ des blocs $b_k$ présentant une intersection non nulle avec ladite cellule de Voronoï $c_j$ définit un deuxième poids $w_{b_i,c_j}^{(2)} = \frac{P_{b_i}}{\sum_k P_{b_k}}$.

Le fait d'avoir ces deux types de poids relatifs à la surface et à la population permet le mapping « hybride » expliqué ci-avant. Les premiers et deuxièmes poids vérifient par définition la contrainte

$$\sum_i w_{b_i,c_j}^{(1)} = \sum_i w_{b_i,c_j}^{(2)} = 1$$

La valeur du premier paramètre $\sigma_{b_i}$ pour le i-ème bloc $b_i$ en fonction de la valeur dudit premier paramètre $\sigma_{c_j}$ pour chacune des $j$ cellules $c_j$ de Voronoï présentant une intersection non nulle avec ledit bloc est alors préférentiellement donnée grâce à la formule

$\sigma_{b_i} = \sum_j a \cdot w_{b_i,c_j}^{(1)} \cdot w_{b_i,c_j}^{(2)} \cdot \sigma_{c_j}$ avec a une éventuelle constante pour normaliser le résultat (i.e. telle que

$\sum_j a \cdot w_{b_i,c_j}^{(1)} \cdot w_{b_i,c_j}^{(2)} = 1$ ).

Si un deuxième paramètre $\lambda$ est considéré, l'étape (b) peut comprendre sa moyennisation, i.e. le calcul d'une valeur en cours du temps du deuxième paramètre de téléphonie mobile directement moyennisé sur l'ensemble des cellules de Voronoï (il n'est pas nécessaire de le mapper sur les blocs).

L'utilisation du mapping hybride montre des gains de précision allant de 6 à 20% par rapport à du mapping purement surfacique.

Enfin, dans une étape (c), sont appris les coefficients d'un modèle liant au moins ledit premier paramètre de téléphonie mobile à la population, à partir de la base de données d'apprentissage représentatives de la population dans chaque bloc dudit ensemble (i.e. les valeurs de population $P_{b_i}$).

Avantageusement, le modèle de l'étape (c) lie également le deuxième paramètre de téléphonie mobile à la population.

Comme dans l'art antérieur, ledit modèle est globalement de la forme $\rho(t) = \alpha(\lambda,t)\sigma(t)^{\beta(\lambda,t)}$, où $\rho(t)$ est la densité de population, $\sigma(t)$ le premier paramètre de téléphonie mobile, et $\lambda(t)$ le deuxième paramètre.

Toutefois, de façon très surprenante, les inventeurs ont découvert que les $\alpha(\lambda,t)$ et $\beta(\lambda,t)$ étaient non pas proportionnels à $\lambda(t)$ (on rappelle qu'était connu un modèle $\rho_i = (\alpha_\alpha \lambda_i + b_\alpha)\sigma_i^{(a_\beta \lambda_i + b_\beta)}$), mais au contrairement inversement proportionnels à $\lambda(t)$.

Plus précisément, de façon particulièrement avantageuse $\alpha(\lambda,t) = \frac{a_\alpha}{\lambda(t)} + b_\alpha$ et

$\beta(\lambda,t) = \frac{a_\beta}{\lambda(t)} + b_\beta$, où $a_\alpha$, $b_\alpha$, $a_\beta$, $b_\beta$ sont les coefficients appris.

L'apprentissage en lui-même peut être faite de toute manière statistique connue de l'homme du métier, allant de la régression à l'utilisation de réseaux de neurones.

*Procédé d'estimation*

Selon un deuxième aspect est proposé le procédé d'estimation de la population présente dans une zone donnée à un instant donné. La zone donnée est préférentiellement incluse dans ladite zone de référence, mais on comprendra qu'elle peut être partiellement incluse, voire seulement voisine. De façon générale, ladite zone donnée est bien plus petite que la zone de référence.

Comme expliqué, la zone donnée peut être un bloc mais également un lieu-dit, c'est-à-dire un espace fermé tel qu'un stade ou un centre commercial, le cas échéant lors d'une situation occasionnelle comme un match. Malgré le caractère inhabituel de telles situations, on va montrer que le modèle défini précédemment reste particulièrement précis.

Ce deuxième procédé commence par une étape (a) de mise en œuvre du procédé d'apprentissage de coefficients d'estimation de la population dans la zone de référence selon le premier aspect. En d'autres termes, on apprend $a_\alpha$, $b_\alpha$, $a_\beta$, $b_\beta$ à partir des données d'apprentissage.

Dans une étape (b) similaire à l'étape (a) du premier procédé, pour chaque cellule de Voronoï présentant une intersection non nulle avec ladite zone donnée (on peut également rajouter la condition de sélection seulement des cellules de Voronoï telles que les antennes-relais 2a, 2b associées soient à l'intérieur de ladite zone donnée), est obtenue par l'équipement 10 depuis le serveur 20a, 20b d'opérateur téléphonique la valeur à l'instant donné pour ladite cellule de Voronoï du premier paramètre de téléphonie mobile.

A nouveau cette étape peut également comprendre l'obtention de la valeur à l'instant donnée pour chaque cellule de Voronoï considérée (i.e. présentant une intersection non nulle avec ladite zone donnée) du deuxième paramètre de téléphonie mobile (représentatif de l'activité moyenne des abonnés de l'opérateur téléphonique).

La différence avec le premier procédé est qu'on ne procédé plus à du mapping : on reste au niveau cellulaire. Comme on va le voir, ce choix très astucieux permet d'éviter de sous-évaluer la population dans un lieu-dit. Ainsi, l'étape (c) comprend le calcul direct d'une valeur globale du premier paramètre pour ladite zone donnée en fonction :

  ◦ De la valeur dudit premier paramètre de téléphonie mobile obtenu pour chacune des cellules de Voronoï présentant une intersection non nulle avec ladite zone donnée ;
  ◦ de la surface de la zone donnée et de chacune desdites cellules de Voronoï présentant une intersection non nulle avec ladite zone donnée ; et

Par exemple si $\sigma_z$ est la valeur globale du premier paramètre et $A_z$ l'aire de la zone donnée,

$$\sigma_z = \frac{1}{A_z} \sum_j A_{c_j} \sigma_{c_j}.$$

L'idée de ne pas considérer des blocs est d'éviter de placer des personnes dans les blocs hors du lieu-dit.

En effet si par exemple on considère un lieu-dit comme un stade, équipé d'un certain nombre d'antennes, alors les cellules de certaines de ces antennes vont « déborder » du stade et une partie des personnes sera statistiquement affectée aux blocs voisins de ceux du stade (i.e. à l'extérieur du stade) du fait de la répartition uniforme, ce qui revient à grandement sous-estimer la population présente dans le stade. En effet, la densité de population immédiatement à l'extérieur du lieu-dit est nécessairement négligeable devant la densité de population à l'intérieur.

De façon préférée, la valeur globale du premier paramètre est corrigée en retirant une valeur moyenne, de sorte à ne compter que les « visiteurs » du lieu-dit, c'est-à-dire les personnes qui n'y sont normalement pas (par exemple, seulement les voyageurs dans une gare et pas les agents).

Dans une étape (d), les moyens de traitement 11 appliquent à la valeur globale calculée (le cas échéant corrigée) du premier paramètre ledit modèle liant au moins ledit premier paramètre de téléphonie mobile à la population avec les coefficients appris.

En d'autres termes, on calcule $\rho_z(t) = \alpha(\lambda, t)\sigma_z(t)^{\beta(\lambda,t)}$, avec $\alpha(\lambda, t) = \dfrac{a_\alpha}{\lambda(t)} + b_\alpha$ et $\beta(\lambda, t) = \dfrac{a_\beta}{\lambda(t)} + b_\beta$, où $a_\alpha$, $b_\alpha$, $a_\beta$, $b_\beta$ sont les coefficients appris.

Lors de tests sur une dizaine de matchs de football ou de rugby dans des stades, les populations médiane et maximale de ces stades sur la durée du match ont été estimées par la présente méthode, et comparées avec le décompte réel. Par exemple, lors d'un match de football devant 42000 spectateurs, la population médiane estimée est de 39289, et la population maximale estimée est de 46734.

On constate sur ces tests que l'erreur quadratique moyenne normalisée ne dépasse pas 15%, ce qui prouve l'extrême fiabilité du procédé, alors même que l'on pouvait supposer de nombreux biais, notamment du fait du caractère international de certains matchs (roaming des terminaux 3).

*Produit programme d'ordinateur*

Selon un troisième et un quatrième aspects, l'invention concerne un produit programme d'ordinateur comprenant des instructions de code pour l'exécution (en particulier sur les moyens de traitement de données 11 de l'équipement 10) du procédé selon le premier ou le deuxième aspect d'apprentissage de coefficients d'estimation de la population dans une zone de référence ou d'estimation de la population présente dans une zone donnée à un instant donné, ainsi que des moyens de stockage lisibles par un équipement informatique (notamment des moyens de stockage de données 12 de l'équipement 10) sur lequel on trouve ce produit programme d'ordinateur.

**Revendications**

1. Procédé d'apprentissage de coefficients d'estimation de la population dans une zone de référence, comprenant la mise en œuvre par des moyens de traitement de données (11) d'un équipement (10) d'étapes de :

   (a) Pour chacune d'une pluralité d'antennes-relais (2a, 2b) définissant une première partition en cellules de Voronoï de ladite zone de référence, obtention depuis un serveur (20a, 20b) d'opérateur téléphonique de la valeur au cours du temps pour ladite cellule de Voronoï associée à l'antenne-relais (2a, 2b) d'un premier paramètre de téléphonie mobile représentatif de la présence d'abonnés de l'opérateur téléphonique et d'un deuxième paramètre de téléphonie mobile représentatif de l'activité moyenne des abonnés de l'opérateur téléphonique ;
   (b) Pour chaque bloc d'un ensemble de blocs définissant une deuxième partition de ladite zone de référence, calcul de la valeur au cours du temps pour le bloc dudit premier paramètre de téléphonie mobile, en fonction, pour chaque cellule de Voronoï présentant une intersection non nulle avec ledit bloc :

     ◦ De la valeur dudit premier paramètre de téléphonie mobile obtenu pour ladite cellule de Voronoï ;
     ◦ de la surface de ladite intersection par rapport à la surface de toute ladite cellule de Voronoï ; et
     ◦ de la population dudit bloc par rapport aux populations des blocs présentant une intersection non nulle avec ladite cellule de Voronoï ;

   calcul d'une valeur en cours du temps du deuxième paramètre de téléphonie mobile moyennisé sur l'ensemble des cellules de Voronoï ;
   (c) Apprentissage des coefficients d'un modèle liant lesdits premier paramètre et deuxième paramètre de téléphonie mobile à la population, à partir d'une base de données d'apprentissage représentatives de la population dans chaque bloc dudit ensemble ; ledit modèle étant de la forme $\rho(t) = \alpha(\lambda, t)\sigma(t)^{\beta(\lambda,t)}$, où $\rho(t)$ est la densité de population, $\sigma(t)$ le premier paramètre de téléphonie mobile, et $\lambda(t)$ le deuxième paramètre,

avec $\alpha(\lambda, t) = \frac{a_\alpha}{\lambda(t)} + b_\alpha$ et

$\beta(\lambda, t) = \frac{a_\beta}{\lambda(t)} + b_\beta$, où $a_\alpha, b_\alpha, a_\beta, b_\beta$ sont les coefficients appris.

2. Procédé selon la revendication 1, dans lequel le premier paramètre de téléphonie mobile représentatif de la présence d'abonnés de l'opérateur téléphonique est le nombre de terminaux mobiles (3) connectés ayant effectué dans un intervalle de temps prédéterminé au moins un événement actif.

3. Procédé selon la revendication 2, dans lequel ledit événement actif est choisi parmi un début ou une fin d'appel téléphonique, une émission ou une réception d'un message de type SMS, et une émission ou une réception de données.

4. Procédé selon l'une des revendication 1 à 3, dans lequel l'étape (a) comprend le calcul par le serveur d'opérateur (20a, 20b) de la valeur au cours du temps pour chaque cellule de Voronoï du premier paramètre de téléphonie mobile en fonction de données brutes des antennes-relais (2a, 2b).

5. Procédé selon l'une des revendication 1 à 4, dans lequel la valeur dudit premier paramètre $\sigma_{b_i}$ pour un bloc $b_i$ en fonction des valeurs dudit paramètre $\sigma_{c_j}$ pour chaque cellule de Voronoï $c_j$ présentant une intersection non nulle avec ledit bloc $b_i$ est donné par la formule $\sigma_{b_i} = \sum_j a \cdot w^{(1)}_{b_i,c_j} \cdot w^{(2)}_{b_i,c_j} \cdot \sigma_{c_j}$, où $w^{(1)}_{b_i,c_j}$ est le rapport entre la surface $A_{b_i \cap c_j}$ de ladite intersection $b_i \cap c_j$ et la surface $A_{c_j}$ de toute ladite cellule de Voronoï $c_j$, $w^{(2)}_{b_i,c_j}$ est le rapport entre la population $P_{b_i}$ dudit bloc $b_i$ et les populations $\sum_k P_{b_k}$ des blocs $b_k$ présentant une intersection non nulle avec ladite cellule de Voronoï $c_j$, et a est une constante.

6. Procédé d'estimation de la population dans une zone donnée à un instant donné, comprenant la mise en œuvre par des moyens de traitement de données (11) de l'équipement (10) d'étapes de :

   (a) Mise en œuvre d'un procédé d'apprentissage de coefficients d'estimation de la population dans la zone de référence selon l'une des revendications 1 à 5 ;
(b) Pour chaque cellule de Voronoï présentant une intersection non nulle avec ladite zone donnée, obtention depuis le serveur (20a, 20b) d'opérateur téléphonique de la valeur à l'instant donné pour ladite cellule de Voronoï des premier paramètre et deuxième paramètre de téléphonie mobile ;
(c) Calcul d'une valeur globale du premier paramètre pour ladite zone donnée en fonction

⚬ De la valeur dudit premier paramètre de téléphonie mobile obtenu pour chacune des cellules de Voronoï présentant une intersection non nulle avec ladite zone donnée ;
⚬ de la surface de la zone donnée et de chacune desdites cellules de Voronoï présentant une intersection non nulle avec ladite zone donnée ; et

calcul de la valeur du deuxième paramètre moyennisé sur l'ensemble des cellules de Voronoï présentant une intersection non nulle avec ladite zone donnée ;
(d) Application à la valeur globale calculée du premier paramètre et à la valeur calculée du deuxième paramètre moyennisé, dudit modèle liant lesdits premier paramètre et deuxième paramètre de téléphonie mobile à la population avec les coefficients appris.

**7.** Procédé selon la revendication 6, dans lequel l'étape (c) comprend également la correction de la valeur globale du premier paramètre en retirant une valeur moyenne du premier paramètre au cours du temps.

**8.** Produit programme d'ordinateur comprenant des instructions de code pour l'exécution d'un procédé selon l'une des revendications 1 à 7 d'apprentissage de coefficients d'estimation de la population dans une zone de référence ou d'estimation de la population dans une zone donnée à un instant donné, lorsque ledit programme est exécuté par un ordinateur

**9.** Moyens de stockage lisibles par un équipement informatique sur lesquels un produit programme d'ordinateur comprend des instructions de code pour l'exécution d'un procédé selon l'une des revendications 1 à 7 d'apprentissage de coefficients d'estimation de la population dans une zone de référence ou d'estimation de la population dans une zone donnée à un instant donné.

**Patentansprüche**

**1.** Verfahren zum Einlernen von Koeffizienten zum Einschätzen der Population in einem Referenzgebiet, das das Implementieren, durch Datenverarbeitungsmittel (11) einer Ausrüstung (10), von Schritten umfasst des:

(a) für jede aus einer Vielzahl von Relaisantennen (2a, 2b), die eine erste Partitionierung des Referenzgebiets in Voronoi-Zellen definieren, Erhaltens des zeitlichen Verlaufswerts eines ersten Mobiltelefonie-Parameters, der für die Präsenz von Teilnehmern des Telefonbetreibers repräsentativ ist, und eines zweiten Mobiltelefonie-Parameters, der für die mittlere Aktivität der Teilnehmer des Telefonbetreibers repräsentativ ist, für die mit der Relaisantenne (2a, 2b) verknüpfte Voronoi-Zelle von einem Server (20a, 20b) eines Telefonbetreibers;
(b) für jeden Block aus einem Satz von Blöcken, die eine zweite Partitionierung des Referenzgebiets definieren, Berechnen des zeitlichen Verlaufswerts des ersten Mobiltelefonie-Parameters für den Block für jede Voronoi-Zelle, die eine Schnittmenge von ungleich null mit dem Block aufweist, in Abhängigkeit:

⚬ vom Wert des ersten Mobiltelefonie-Parameters, der für die Voronoi-Zelle erhalten wurde;
⚬ von der Fläche der Schnittmenge in Bezug auf die Fläche der ganzen Voronoi-Zelle; und
⚬ von der Population des Blocks in Bezug auf die Populationen der Blöcke, die eine Schnittmenge von ungleich null mit der Voronoi-Zelle aufweisen;

Berechnens eines zeitlichen Verlaufswerts des zweiten Mobiltelefonie-Parameters über die Gesamtheit der Voronoi-Zellen gemittelt;
(c) Einlernens der Koeffizienten eines Modells, das den ersten und zweiten Mobiltelefonie-Parameter mit der Bevölkerung verknüpft, auf Grundlage einer Bank von Einlerndaten, die für die Population in jedem Block des Satzes repräsentativ sind; wobei das Modell der Form $\rho(t) = \alpha(\lambda, t)\sigma(t)^{\beta(\lambda, t)}$ entspricht, wobei $\rho(t)$ die Populationsdichte, $\sigma(t)$ der erste, und $\lambda(t)$ der zweite Mobiltelefonie-Parameter ist, wobei

$$\alpha(\lambda, t) = \frac{a_\alpha}{\lambda(t)} + b_\alpha$$

und $\beta(\lambda, t) = \frac{a_\beta}{\lambda(t)} + b_\beta$, wobei $a_\alpha$, $b_\alpha$, $a_\beta$, $b_\beta$ die eingelernten Koeffizienten sind.

**2.** Verfahren nach Anspruch 1, wobei es sich beim ersten Mobiltelefonie-Parameter, der für die Präsenz von Teilnehmern des Telefonbetreibers repräsentativ ist, um die Anzahl von verbundenen mobilen Endgeräten (3) handelt, die in einem vorbestimmten Zeitintervall mindestens einen aktiven Vorgang ausgeführt haben.

**3.** Verfahren nach Anspruch 2, wobei der aktive Vorgang aus einem Beginn oder einem Ende eines Telefonanrufs, einer Sendung oder einem Empfang einer Nachricht vom Typ SMS, und einer Sendung oder einem Empfang von Daten ausgewählt ist.

**4.** Verfahren nach einem der Ansprüche 1 bis 3, wobei der Schritt (a) das Berechnen des zeitlichen Verlaufswerts des ersten Mobiltelefonie-Parameters für jede Voronoi-Zelle in Abhängigkeit von Rohdaten der Relaisantennen (2a, 2b) durch den Betreiber-Server (20a, 20b) umfasst.

**5.** Verfahren nach einem der Ansprüche 1 bis 4, wobei der Wert des ersten Parameters $\sigma_{b_i}$ für einen Block $b_i$ in Abhängigkeit von den Werten des Parameters $\sigma_{c_j}$ für jede Voronoi-Zelle $c_j$, die eine Schnittmenge von ungleich null mit dem Block $b_i$ aufweist, durch die Formel $\sigma_{b_i} = \sum_j a \cdot w_{b_i,c_j}^{(1)} \cdot w_{b_i,c_j}^{(2)} \cdot \sigma_{c_j}$ wiedergegeben wird, wobei $w_{b_i,c_j}^{(1)}$ das Verhältnis zwischen der Fläche $A_{b_i \cap c_j}$ der Schnittmenge $b_i \cap c_j$ und der Fläche $A_{c_j}$ der ganzen Voronoi-Zelle $c_j$ ist, $w_{b_i,c_j}^{(2)}$ das Verhältnis zwischen der Population $P_{b_i}$ des Blocks $b_i$ und den Populationen $\sum_k P_{b_k}$ der Blöcke $b_k$ ist, die eine Schnittmenge von ungleich null mit der Voronoi-Zelle $c_j$ aufweisen, und a eine Konstante ist.

**6.** Verfahren zum Einschätzen der Population in einem gegebenen Gebiet zu einem gegebenen Zeitpunkt, das das Implementieren, durch Datenverarbeitungsmittel (11) der Ausrüstung (10), von Schritten umfasst des:

    (a) Implementierens eines Verfahrens zum Einlernen von Koeffizienten zum Einschätzen der Population im Referenzgebiet nach einem der Ansprüche 1 bis 5;
    (b) für jede Voronoi-Zelle, die eine Schnittmenge von ungleich null mit dem gegebenen Gebiet aufweist, Erhaltens des Werts des ersten und zweiten Mobiltelefonie-Parameters zu dem gegebenen Zeitpunkt für die Voronoi-Zelle vom Telefonbetreiber-Server (20a, 20b);

    (c) Berechnens eines Gesamtwerts des ersten Parameters für das gegebene Gebiet in Abhängigkeit

        ∘ vom Wert des ersten Mobiltelefonie-Parameters, der für jede der Voronoi-Zellen erhalten wurde, die eine Schnittmenge von ungleich null mit dem gegebenen Gebiet aufweist;
        ∘ von der Fläche des gegebenen Gebiets und von jeder der Voronoi-Zellen, die eine Schnittmenge von ungleich null mit dem gegebenen Gebiet aufweist; und

    Berechnens des Werts des zweiten Parameters über die Gesamtheit der Voronoi-Zellen gemittelt, die eine Schnittmenge von ungleich null mit dem gegebenen Gebiet aufweisen;
    (d) Anwendens des Modells, das den ersten und zweiten Mobiltelefonie-Parameter mit der Population verknüpft, mit den eingelernten Koeffizienten auf den berechneten Gesamtwert des ersten Parameters und auf den berechneten Wert des gemittelten zweiten Parameters.

**7.** Verfahren nach Anspruch 6, wobei der Schritt (c) ebenfalls das Korrigieren des Gesamtwerts des ersten Parameters unter Abziehen eines mittleren zeitlichen Verlaufswerts des ersten Parameters umfasst.

**8.** Computerprogrammprodukt, das Codeanweisungen zum Ausführen eines Verfahrens nach einem der Ansprüche 1 bis 7 zum Einlernen von Koeffizienten zum Einschätzen der Population in einem Referenzgebiet oder zum Einschätzen der Population in einem gegebenen Gebiet zu einem gegebenen Zeitpunkt umfasst, wenn das Programm von einem Computer ausgeführt wird.

**9.** Speichermittel, die von einer IT-Ausrüstung gelesen werden können, auf denen ein Computerprogrammprodukt Codeanweisungen zum Ausführen eines Verfahrens nach einem der Ansprüche 1 bis 7 zum Einlernen von Koeffizienten zum Einschätzen der Population in einem Referenzgebiet oder zum Einschätzen der Population in einem gegebenen Gebiet zu einem gegebenen Zeitpunkt umfasst.

**Claims**

**1.** Method of learning of estimation coefficients of the population in a reference zone, comprising the implementation by means of data processing (11) of a piece of equipment (10) of steps of:

    (a) For each one of a plurality of relay antennas (2a, 2b) defining a first partition into Voronoi cells of said reference zone, obtaining, from a server (20a, 20b) of a telephone operator, the value over time for said Voronoi cell associated with the relay antenna (2a, 2b) of a first mobile telephony parameter that represents the presence of subscribers of the telephone operator and of a second mobile telephony parameter that represents the average activity of the subscribers of the telephone operator;

(b) For each block of a set of blocks defining a second partition of said reference zone, calculating the value over time for the block of said first mobile telephony parameter, according, for each Voronoi cell that has a non-zero intersection with said block, to:

> ◦ the value of said first mobile telephony parameter obtained for said Voronoi cell;
> ◦ the surface of said intersection with respect to the surface of the entire said Voronoi cell; and
> ◦ the population of said block with respect to the populations of the blocks that have a non-zero intersection with said Voronoi cell;

calculating a value over time of the second mobile telephony parameter averaged over all the Voronoi cells;

(c) Learning the coefficients of a model that links said first parameter and second mobile telephony parameter to the population, using a learning database that represents the population in each block of said set; said model being of the form $\rho(t) = \alpha(\lambda, t)\sigma(t)^{\beta(\lambda,t)}$, where $\rho(t)$ is the population density, $\sigma(t)$ the first mobile telephony parameter, and $\lambda(t)$ the second parameter, with

$$\alpha(\lambda, t) = \frac{a_\alpha}{\lambda(t)} + b_\alpha$$

and $\beta(\lambda, t) = \frac{a_\beta}{\lambda(t)} + b_\beta$, where $a_\alpha$, $b_\alpha$, $a_\beta$, $b_\beta$ are the learned coefficients.

2. Method according to claim 1, wherein the first mobile telephony parameter that represents the presence of subscribers of the telephone operator is the number of connected mobile terminals (3) that have carried out within a predetermined interval of time at least one active event.

3. Method according to claim 2, wherein said active event is chosen from a beginning or an end of a telephone call, an emission or a reception of a message of the SMS type, and an emission or a reception of data.

4. Method according to one of claims 1 to 3, wherein step (a) comprises calculating, by the operator server (20a, 20b), the value over time for each Voronoi cell of the first mobile telephony parameter according to the raw data of the relay antennas (2a, 2b).

5. Method according to one of claims 1 to 4, wherein the value of said first parameter $\sigma_{b_i}$ for a block $b_i$ according to the values of said parameter $\sigma_{c_j}$ for each Voronoi cell $c_j$ that has a non-zero intersection with said block $b_i$ is given by the formula

$$\sigma_{b_i} = \sum_j a \cdot w^{(1)}_{b_i,c_j} \cdot w^{(2)}_{b_i,c_j} \cdot \sigma_{c_j},$$ where

$w^{(1)}_{b_i,c_j}$ is the ratio between the surface $A_{b_i \cap c_j}$ of said intersection $b_i \cap c_j$ and the surface $A_{c_j}$ of the entire said Voronoi cell $c_j$, $w^{(2)}_{b_i,c_j}$ is the ratio between the population $P_{b_i}$ of said block $b_i$ and the populations $\sum_k P_{b_k}$ of the blocks $b_k$ that have a non-zero intersection with said Voronoi cell $c_j$, and a is a constant.

6. Method of estimation of the population in a given zone at a given time, comprising the implementation by means of data processing (11) of the piece of equipment (10) of steps of:

> (a) Implementing a method of learning of estimation coefficients of the population in the reference zone according to one of claims 1 to 5;
> (b) For each Voronoi cell that has a non-zero intersection with said given zone, obtaining, from the telephone operator server (20a, 20b), the value at the given time for said Voronoi cell of the first parameter and second mobile telephony parameter;
> (c) Calculating a global value of the first parameter for said given zone according to
>
>> ◦ the value of said first mobile telephony parameter obtained for each one of the Voronoi cells that have a non-zero intersection with said given zone;
>> ◦ the surface of the given zone and of each one of said Voronoi cells that have a non-zero intersection with said given zone; and
>
> calculating the value of the second parameter averaged over all the Voronoi cells that have a non-zero intersection with said given zone;
> (d) Application, to the calculated global value, of the first parameter; and, to the calculated value of the second average parameter, of said model that links said first parameter and second mobile telephony parameter to the population with the learned coefficients.

7. Method according to claim 6, wherein step (c) also comprises correcting the global value of the first parameter by withdrawing an average value of the first parameter over time.

8. Computer program product comprising code instructions for the execution of a method according to one of claims 1 to 7 of learning of estimation coefficients of the population in a reference zone or of estimation of the population in a given zone at a given time, when said program is executed by a computer.

9. Means of storage that can be read by a piece of computer equipment on which a computer program product comprises code instructions for the execution of a method according to one of claims 1 to 7 of learning of estimation coefficients of the population in a reference zone or of estimation of the population in a given zone at a given time.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9094797 B

**Littérature non-brevet citée dans la description**

- **PIERRE DEVILLE et al.** Dynamic population mapping using mobile photo data. *PNAS,* 11 Novembre 2014, vol. 111
- **GHAZALAEH KHODABANDELOU.** *Population Estimation from Mobile Network Traffic Metadata*
- **FENGLI XU et al.** *Context-aware real-time population estimation for metropolis,* 12 Septembre 2016